# EUROPÄISCHE PATENTSCHRIFT

(11) **EP 3 521 534 B1**
(45) Veröffentlichungstag und Bekanntmachung des Hinweises auf die Patenterteilung: **15.09.2021**
(21) Anmeldenummer: 19154392.5
(22) Anmeldetag: 30.01.2019
(51) Int. Cl.: E04H 12/08, F03D 13/20

(54) **SCHUTZANORDNUNG FÜR EINE FLANSCHVERBINDUNG EINER WINDKRAFTANLAGE**
PROTECTION DEVICE FOR A FLANGE CONNECTION OF A WIND TURBINE
DISPOSITIF DE PROTECTION POUR UN RACCORD À BRIDE D'UNE ÉOLIENNE

(30) Priorität: 05.02.2018 DE 102018201682
(43) Veröffentlichungstag der Anmeldung: 07.08.2019
(73) Patentinhaber: KTW Umweltschutztechnik GmbH, 99441 Mellingen (DE)
(72) Erfinder: DEININGER, Klaus, 99428 Weimar (DE)
(74) Vertreter: Liedtke & Partner Patentanwälte

(56) Entgegenhaltungen:
- CN-B- 103 363 247
- DE-U1-202013 010 214
- JP-A- 2009 195 773
- US-A1- 2007 022 703

## Beschreibung

Die Erfindung betrifft eine Windkraftanlage gemäß dem Oberbegriff des Anspruchs 1 und ein Verfahren zur Montage einer Schutzanordnung an einer Flanschverbindung einer Windkraftanlage.

Windkraftanlagen umfassen im Allgemeinen ein Fundament, einen an dem Fundament verankerten Turm oder Mast, ein Maschinenhaus und einen Rotor.

Ein Turm einer so genannten Offshore-Windkraftanlage umfasst dabei bei einer so genannten Monopile-Bauweise zumindest einen als so genannter Monopile ausgebildeten Pfahl, welcher in den Meeresboden gerammt ist. Die Magnetanordnung ermöglicht eine besonders einfache Demontage der Manschette von dem zweiten Bauteil, insbesondere zu Wartungs- und Kontrollzwecken der Flanschverbindung. Oberhalb einer Wasseroberfläche sind mehrere rohrförmige Turmsegmente zur Bildung des Turms übereinander angeordnet, wobei ein unteres Turmsegment mit dem Pfahl und die weiteren Turmsegmente mit dem jeweils darunter angeordneten Turmsegment verbunden sind. Zur Erzeugung dieser Verbindung umfasst der Pfahl einen nach innen gerichteten und einen Flansch bildenden Kragen. Auch die Turmsegmente umfassen jeweils zumindest einen nach innen gerichteten und einen Flansch bildenden Kragen, wobei aneinander anliegende Flansche mittels Schraubverbindungen aneinander befestigt sind und jeweils eine Flanschverbindung bilden. Bei Offshore-Windkraftanlagen sind zumindest nahe oberhalb der Wasseroberfläche angeordnete Flanschverbindungen in großem Maße Kondensaten des Meerwassers ausgesetzt, was zu einer hohen Korrosionsgefahr der Schraubverbindungen führt.

Aus der JP 2009 195 773 A ist eine chemische Vorrichtung bekannt, welche eine Mehrzahl rohrförmiger Körper aufweist. Die rohrförmigen Körper weisen an einem Ende einen Flanschteil auf und sind mit einem angrenzenden Körper in einem Verbindungsabschnitt verbunden. In dem Verbindungsabschnitt sind Flanschteile benachbarter Köper mit einem Verbindungselement verbunden. Der Verbindungsabschnitt ist mit einem Abdeckkörper bedeckt, wobei ein Trocknungsgas durch einen zwischen dem Verbindungsabschnitt und dem Abdeckkörper befindlichen Raum strömt.

Weiterhin ist aus der DE 20 2013 010 214 U1 eine Flanschverbindung an einer Offshore-Struktur, umfassend ein erstes unteres Anschlussprofil und ein mit dem ersten unteren Anschlussprofil verbundenes zweites oberes Anschlussprofil, bekannt. Das erste untere und das zweite obere Anschlussprofil stützen sich jeweils über einen Flansch gegeneinander ab. Die Flansche weisen jeweils fluchtend zueinander ausgerichtete Durchgriffsöffnungen auf, wobei die Durchgriffsöffnungen der Flansche von Bolzen, Gewindebolzen oder Schrauben oder dergleichen durchsetzt sind. Das erste untere Anschlussprofil und das zweite obere Anschlussprofil weisen eine umlaufende Manschette auf, die eine Stoßfuge zwischen den Flanschen außen verdeckt und die einen an die Stoßfuge angrenzenden Ringraum bildet. Der Ringraum lässt über eine Drainageöffnung eine selbsttätige Entwässerung in Gewichtskraftrichtung zu.

Der Erfindung liegt die Aufgabe zu Grunde, eine neuartige Windkraftanlage und ein neuartiges Verfahren zur Montage einer Schutzanordnung an einer Flanschverbindung einer Windkraftanlage anzugeben.

Hinsichtlich der Windkraftanlage wird die Aufgabe erfindungsgemäß durch die im Anspruch 1 angegebenen Merkmale und hinsichtlich des Verfahrens durch die im Anspruch 7 angegebenen Merkmale gelöst.

Vorteilhafte Ausgestaltungen der Erfindung sind Gegenstand der Unteransprüche.

Die Windkraftanlage umfasst ein Fundament, einen an dem Fundament befestigten Turm mit einem rohrförmigen Turmsegment oder mit mehreren rohrförmigen Turmsegmenten und zumindest eine Schutzanordnung. Das Fundament und das an diesem befestigte Turmsegment umfassen jeweils einen nach innen gerichteten und einen Flansch bildenden Kragen und/oder mehrere miteinander verbundene Turmsegmente umfassen an sich zugewandten Seiten jeweils einen nach innen gerichteten und einen Flansch bildenden Kragen. Aneinander angrenzende Flansche sind mittels mehreren Schraubverbindungen jeweils zu einer Flanschverbindung verbunden. Erfindungsgemäß ist zumindest eine Flanschverbindung mit der Schutzanordnung abgedeckt. Dabei umfasst die Schutzanordnung für eine zwei Flansche und mehrere Schraubverbindungen umfassende Flanschverbindung einer Windkraftanlage eine die Flanschverbindung vollständig abdeckende und an Bauteilen, welche die Flansche umfassen, befestigte Manschette. Die Schutzanordnung umfasst weiterhin eine fluidisch mit einem zwischen der Manschette und der Flanschverbindung ausgebildeten Raum gekoppelte Entfeuchtungsvorrichtung, welche dem Raum entfeuchtete Luft zuführt und insbesondere feuchte Luft entzieht.

Die Schutzanordnung ermöglicht bei der Windkraftanlage eine Abdeckung einer Flanschverbindung und eine Entfeuchtung eines zwischen der Manschette und der Flanschverbindung befindlichen Raums. Somit kann insbesondere bei Offshore-Windkraftanlagen, bei welchen zumindest nahe oberhalb einer Wasseroberfläche angeordnete Flanschverbindungen in großem Maße Kondensaten von Meerwasser ausgesetzt sind, eine Korrosionsgefahr der Flanschverbindung, insbesondere von Schraubverbindungen der Flanschverbindung, mit geringem Aufwand und in zuverlässiger Art und Weise signifikant reduziert werden. Daraus folgend können eine Häufigkeit und ein Aufwand von Kontrollen und einer Wartung der Flanschverbindungen sowie eines Austauschs der Schraubverbindungen signifikant reduziert und somit eine Lebensdauer der Windkraftanlage erhöht werden.

Gemäß einer möglichen Ausgestaltung der Windkraftanlage umfasst die Manschette zumindest ein Abdeckelement, eingerichtet zur Abdeckung zumindest eines Abschnittes der Flanschverbindung. Mittels des Abdeckelements wird in einfacher Weise eine Abdeckung der Flanschverbindung erzielt.

Gemäß einer möglichen weiteren Ausgestaltung der Windkraftanlage ist an einem ersten Endbereich des Abdeckelements ein zu einer Befestigung an einer inneren Mantelfläche eines einen der Flansche umfassenden ersten Bauteils vorgesehener Klebebereich angeordnet. Der Klebebereich ermöglicht eine dauerhafte und sichere Befestigung des Abdeckelements an dem ersten Bauteil, wobei bei einer vollflächigen Verklebung des Abdeckelements im ersten Endbereich ein Medieneintritt, beispielsweise ein Eintritt von Meerwasser, zwischen dem Abdeckelement und dem ersten Bauteil in einen Bereich der Flanschverbindung sicher vermieden ist.

Gemäß einer möglichen Weiterbildung der Windkraftanlage umfasst diese eine zu einer Anordnung oberhalb des Klebebereichs des Abdeckelements vorgesehene Kappleiste. Die Kappleiste ermöglicht eine weitere Erhöhung einer Zuverlässigkeit der mediendichten Ausbildung zwischen dem erstem Endbereich der Abdeckung und dem ersten Bauteil.

Eine mögliche Ausgestaltung der Windkraftanlage sieht vor, dass an einem zweiten Endbereich des Abdeckelements eine zu einer Befestigung an einer inneren Mantelfläche eines einen der Flansche umfassenden zweiten Bauteils vorgesehener Magnetanordnung angeordnet ist. Die Magnetanordnung ermöglicht eine besonders einfache Demontage der Manschette von dem zweiten Bauteil, insbesondere zu Wartungs- und Kontrollzwecken der Flanschverbindung.

Eine weitere mögliche Ausgestaltung der Windkraftanlage sieht vor, dass das Abdeckelement aus einem mechanisch flexiblen Material gebildet ist. Die mechanische Flexibilität des Abdeckelements ermöglicht eine einfache Handhabung desselben während einer Montage und Demontage an der Flanschverbindung. Beispielsweise ist das mechanisch flexible Material ein gegen Meerwasser beständiger Kunststoff.

In dem erfindungsgemäßen Verfahren zur Montage einer Schutzanordnung an einer Flanschverbindung einer Windkraftanlage wird eine Manschette der Schutzanordnung an einer Flanschverbindung zwischen einem Fundament und einem an diesem mittels einer Flanschverbindung befestigten Turmsegment die Flanschverbindung vollständig abdeckend befestigt. Alternativ oder zusätzlich wird eine Manschette der Schutzanordnung an einer Flanschverbindung zwischen zwei Turmsegmenten die Flanschverbindung vollständig abdeckend angeordnet. Die Entfeuchtungsvorrichtung wird fluidisch mit einem zwischen der zumindest einen Manschette und der zugehörigen Flanschverbindung ausgebildeten Raum gekoppelt.

Durch Abdeckung der Flanschverbindung und eine Entfeuchtung eines zwischen der Manschette und der Flanschverbindung befindlichen Raums kann insbesondere bei Offshore-Windkraftanlagen eine aus Kondenswasser mit hohem Salzgehalt resultierende Korrosionsgefahr der Flanschverbindung, insbesondere von Schraubverbindungen der Flanschverbindung, signifikant reduziert werden. Dabei ist die Montage der Schutzvorrichtung bei gleichzeitig sehr hoher Zuverlässigkeit sehr einfach realisierbar.

Eine mögliche Ausgestaltung des Verfahrens sieht vor, dass ein Abdeckelement der Manschette mit einem ersten Endbereich an einer inneren Mantelfläche des mit dem Fundament gekoppelten Turmsegments verklebt wird. Alternativ oder zusätzlich wird ein Abdeckelement der Manschette mit einem ersten Endbereich an einer inneren Mantelfläche eines oberen von zwei miteinander mittels einer Flanschverbindung verbundenen Turmsegmenten verklebt. Die Verklebung ermöglicht eine dauerhafte und sichere Befestigung des Abdeckelements an dem entsprechenden Turmsegment, wobei bei einer vollflächigen Verklebung des Abdeckelements im ersten Endbereich ein Medieneintritt, beispielsweise ein Eintritt von Meerwasser, zwischen dem Abdeckelement und dem Turmsegment in einen Bereich der Flanschverbindung sicher vermieden ist.

Eine weitere mögliche Ausgestaltung des Verfahrens sieht vor, dass ein Abdeckelement der Manschette mit einem zweiten Endbereich mittels einer Magnetanordnung an einer inneren Mantelfläche des mit dem Turmsegment gekoppelten Fundaments befestigt wird. Alternativ oder zusätzlich wird ein Abdeckelement der Manschette mit einem zweiten Endbereich mittels einer Magnetanordnung an einer inneren Mantelfläche eines unteren von zwei miteinander mittels einer Flanschverbindung verbundenen Turmsegmenten befestigt. Die Magnetanordnung ermöglicht eine besonders einfache Demontage der Manschette von dem Fundament und/oder dem entsprechenden Turmsegment, insbesondere zu Wartungs- und Kontrollzwecken der Flanschverbindung.

Ausführungsbeispiele der Erfindung werden im Folgenden anhand einer Zeichnung näher erläutert.

Darin zeigt:

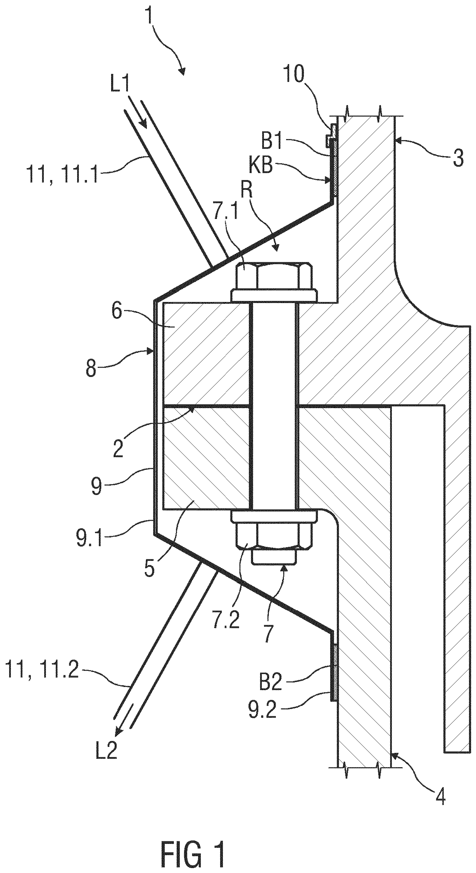

- Figur 1: schematisch eine Schnittdarstellung eines Ausschnitts einer Windkraftanlage im Bereich einer Flanschverbindung.

In der einzigen **Figur 1** ist eine Schnittdarstellung eines Ausschnitts einer Windkraftanlage 1 im Bereich einer Flanschverbindung 2 dargestellt, wobei mittels der Flanschverbindung 2 ein Turmsegment 3 eines mehrere Turmsegmente 3 umfassenden Turms der Windkraftanlage 1 an einem Fundament 4 befestigt ist.

Die Windkraftanlage 1 ist beispielsweise eine Offshore-Windkraftanlage 1, deren Fundament 4 im Meeresboden verankert ist. Beispielsweise ist das Fundament 4 ein als so genannter Monopile ausgebildeter Pfahl, welcher in den Meeresboden gerammt ist.

Das Fundament 4 ist zumindest in einem oberen, dem Turmsegment 3 zugewandten Bereich rohrförmig ausgebildet und umfasst einen nach innen gerichteten und einen umlaufenden Flansch 5 bildenden Kragen.

Das Turmsegment 3 ist rohrförmig ausgebildet und umfasst ebenfalls einen nach innen gerichteten und einen umlaufenden Flansch 6 bildenden Kragen.

Die beiden Flansche 5, 6 sind mittels mehrerer Schraubverbindungen 7, welche jeweils eine Schraube 7.1 und eine Mutter 7.2 umfassen, aneinander befestigt und bilden die Flanschverbindung 2.

Die Flanschverbindung 2 ist bei Offshore-Windkraftanlagen nahe oberhalb der Wasseroberfläche angeordnet und somit in großem Maße Kondensaten von Meerwasser ausgesetzt, was zu einer hohen Korrosionsgefahr der Schraubverbindungen 7 führt.

Um diese Korrosionsgefahr zu minimieren, umfasst die Windkraftanlage 1 eine Schutzanordnung 8, welche die Flanschverbindung 2 abgedeckt. Hierzu umfasst die Schutzanordnung 8 eine Manschette 9 mit einem Abdeckelement 9.1, welches die Flanschverbindung 2 vollständig abdeckt und an dem Turmsegment 3 und dem Fundament 4 befestigt ist. Das Abdeckelement 9.1 umgibt die Flanschverbindung 2 an einer Innenseite von Turmsegment 3 und Fundament 4 vollständig und ist aus einem meerwasserbeständigen und mechanisch flexiblen Kunststoff gebildet.

An einem oberen ersten Endbereich B1 des Abdeckelements 9.1 ist ein zu einer Befestigung an einer inneren Mantelfläche des Turmsegments 3 vorgesehener Klebebereich KB angeordnet, welcher vollflächig mittels eines Klebstoffs mit der Mantelfläche des Turmsegments 3 verklebt ist. Die Schutzanordnung 8 umfasst weiterhin eine oberhalb des Klebebereichs KB des Abdeckelements 9.1 an der inneren Mantelfläche des Turmsegments 3 befestigte Kappleiste 10.

An einem dem ersten Endbereich B1 abgewandten unteren zweiten Endbereich B2 des Abdeckelements 9.1 ist eine zu einer Befestigung an einer inneren Mantelfläche des Fundaments 4 vorgesehene Magnetanordnung 9.2 angeordnet, welche beispielsweise zumindest eine Magnetschiene umfasst. Die Magnetanordnung 9.2 ermöglicht in einfacher Weise eine Demontage der Manschette 9 vom Fundament 4 und ein Hochklappen des Abdeckelements 9.1, so dass die Flanschverbindung 2 insbesondere zu Kontroll- und Wartungszwecken frei zugänglich ist.

Weiterhin umfasst die Schutzanordnung 8 eine Entfeuchtungsvorrichtung 11, welche fluidisch mit einem zwischen der Manschette 9 und der Flanschverbindung 2 ausgebildeten Raum R gekoppelt ist. Die Entfeuchtungsvorrichtung 11 führt dem Raum R über zumindest einen Einlass 11.1 entfeuchtete Luft L1 zu und führt über zumindest einen Auslass 11.2 feuchte Luft L2 ab. Der zumindest eine Einlass 11.1 und der zumindest eine Auslass 11.2 sind dabei insbesondere derart angeordnet, dass in dem Raum R eine Luftströmung entsteht, welche die Abführung der feuchten Luft L2 unterstützt.

In nicht näher dargestellter Weise umfasst der Turm der Windkraftanlage 1 mehrere übereinander angeordnete rohrförmige Turmsegmente 3, welche an sich gegenseitig zugewandten Seiten jeweils einen nach innen gerichteten und einen Flansch 6 bildenden Kragen umfassen, wobei aneinander angrenzende Flansche 6 mittels mehreren Schraubverbindungen 7 jeweils zu einer Flanschverbindung 2 verbunden sind. Auch an diesen Flanschverbindungen 2 kann jeweils eine oben beschriebene Schutzanordnung 8 angeordnet sein.

### BEZUGSZEICHENLISTE

- 1: Windkraftanlage
- 2: Flanschverbindung
- 3: Turmsegment
- 4: Fundament
- 5: Flansch
- 6: Flansch
- 7: Schraubverbindung
- 7.1: Schraube
- 7.2: Mutter
- 8: Schutzanordnung
- 9: Manschette
- 9.1: Abdeckelement
- 9.2: Magnetanordnung
- 10: Kappleiste
- 11: Entfeuchtungsvorrichtung
- 11.1: Einlass
- 11.2: Auslass

- B1: erster Endbereich
- B2: zweiter Endbereich
- KB: Klebebereich
- L1: entfeuchtete Luft
- L2: feuchte Luft
- R: Raum

## Patentansprüche

1. Windkraftanlage (1), umfassend
- ein Fundament (4),
- einen an dem Fundament (4) befestigten Turm mit einem rohrförmigen Turmsegment (3) oder mit mehreren rohrförmigen Turmsegmenten (3) und
- zumindest eine Schutzanordnung (8) für eine zwei Flansche (5, 6) und mehrere Schraubverbindungen (7) umfassende Flanschverbindung (2) einer Windkraftanlage (1), wobei
- das Fundament (4) und das an diesem befestigte Turmsegment (3) jeweils einen nach innen gerichteten und einen Flansch (5, 6) bildenden Kragen umfassen und/oder mehrere miteinander verbundene Turmsegmente (3) an sich zugewandten Seiten jeweils einen nach innen gerichteten und einen Flansch (6) bildenden Kragen umfassen und
- aneinander angrenzende Flansche (5, 6) mittels mehreren Schraubverbindungen (7) jeweils zu einer Flanschverbindung (2) verbunden sind,
**dadurch gekennzeichnet, dass**
- zumindest eine Flanschverbindung (2) mit der Schutzanordnung (8), umfassend
- eine die Flanschverbindung (2) vollständig abdeckende und an Bauteilen, welche die Flansche (5, 6) umfassen, befestigte Manschette (9) und
- eine fluidisch mit einem zwischen der Manschette (9) und der Flanschverbindung (2) ausgebildeten Raum (R) gekoppelte Entfeuchtungsvorrichtung (11), welche dem Raum (R) entfeuchtete Luft (L1) zuführt und insbesondere feuchte Luft (L2) entzieht, abgedeckt ist.

2. Windkraftanlage (1) nach Anspruch 1,
**dadurch gekennzeichnet, dass** die Manschette (9) zumindest ein Abdeckelement (9.1), eingerichtet zur Abdeckung zumindest eines Abschnittes der Flanschverbindung (2), umfasst.

3. Windkraftanlage (1) nach Anspruch 2,
**dadurch gekennzeichnet, dass** an einem ersten Endbereich (B1) des Abdeckelements (9.1) ein zu einer Befestigung an einer inneren Mantelfläche eines einen der Flansche (5, 6) umfassenden ersten Bauteils vorgesehener Klebebereich (KB) angeordnet ist.

4. Windkraftanlage (1) nach Anspruch 3,
**dadurch gekennzeichnet, dass** eine zu einer Anordnung oberhalb des Klebebereichs (KB) des Abdeckelements (9.1) vorgesehene Kappleiste (10) vorgesehen ist.

5. Windkraftanlage (1) nach einem der Ansprüche 2 bis 4,
**dadurch gekennzeichnet, dass** an einem zweiten Endbereich (B2) des Abdeckelements (9.1) eine zu einer Befestigung an einer inneren Mantelfläche eines einen der Flansche (5, 6) umfassenden zweiten Bauteils vorgesehene Magnetanordnung (9.2) angeordnet ist.

6. Windkraftanlage (1) nach einem der Ansprüche 2 bis 5,
**dadurch gekennzeichnet, dass** das Abdeckelement (9.1) aus einem mechanisch flexiblen Material gebildet ist.

7. Verfahren zur Montage einer Schutzanordnung (8) an einer Flanschverbindung (2) einer Windkraftanlage (1), wobei
- eine Manschette (9) der Schutzanordnung (8) an einer Flanschverbindung (2) zwischen einem Fundament (4) und einem an diesem mittels einer Flanschverbindung (2) befestigten Turmsegment (3) die Flanschverbindung (2) vollständig abdeckend befestigt wird und/oder
- eine Manschette (9) der Schutzanordnung (8) an einer Flanschverbindung (2) zwischen zwei Turmsegmenten (3) die Flanschverbindung (2) vollständig abdeckend angeordnet wird und
- eine Entfeuchtungsvorrichtung (11) der Schutzanordnung fluidisch mit einem zwischen der zumindest einen Manschette (9) und der zugehörigen Flanschverbindung (2) ausgebildeten Raum (R) gekoppelt wird.

8. Verfahren nach Anspruch 7, wobei
- ein Abdeckelement (9.1) der Manschette (9) mit einem ersten Endbereich (B1) an einer inneren Mantelfläche des mit dem Fundament (4) gekoppelten Turmsegments (3) verklebt wird und/oder
- ein Abdeckelement (9.1) der Manschette (9) mit einem ersten Endbereich (B1) an einer inneren Mantelfläche eines oberen von zwei miteinander mittels einer Flanschverbindung (2) verbundenen Turmsegmenten (3) verklebt wird.

9. Verfahren nach Anspruch 7 oder 8, wobei
- ein Abdeckelement (9.1) der Manschette (9) mit einem zweiten Endbereich (B2) mittels einer Magnetanordnung (9.2) an einer inneren Mantelfläche des mit dem Turmsegment (3) gekoppelten Fundaments (4) befestigt wird und/oder
- ein Abdeckelement (9.1) der Manschette (9) mit einem zweiten Endbereich (B2) mittels einer Magnetanordnung (9.2) an einer inneren Mantelfläche eines unteren von zwei miteinander mittels einer Flanschverbindung (2) verbundenen Turmsegmenten (3) befestigt wird.

## Claims

1. Wind generator (1) comprising:
- a foundation (4),
- a tower, attached to the foundation (4), having a tubular tower segment (3) or having multiple tubular tower segments (3) and
- at least one protection arrangement (8) for a flange connection (2), comprising two flanges (5, 6) and multiple screw connections (7), of a wind generator (1), wherein
- the foundation (4) and the tower segment (3) attached thereto each comprise a collar that is directed inwards and that forms a flange (5, 6), and/or multiple mutually-connected tower segments (3) each have, on mutually facing sides, a collar that is directed inwards and that forms a flange (6), and
- mutually adjoining flanges (5, 6) are connected by means of multiple screw connections (7) to in each case form a flange connection (2), **characterized in that**
- at least one flange connection (2) is covered by means of the protection arrangement (8), which comprises:
- a sleeve (9) that fully covers the flange connection (2) and that is attached to components which include the flanges (5, 6), and
- a dehumidifying apparatus (11) that is fluidically coupled to a space (R) formed between the sleeve (9) and the flange connection (2) and that supplies dehumidified air (L1) to the space (R) and in particular extracts humid air (L2).

2. Wind generator (1) according to Claim 1, **characterized in that** the sleeve (9) comprises at least one covering element (9.1) that is designed to cover at least one portion of the flange connection (2).

3. Wind generator (1) according to Claim 2, **characterized in that** an adhesive bonding region (KB), provided for attaching to an inner lateral face of a first component comprising one of the flanges (5, 6), is arranged at a first end region (B1) of the covering element (9.1).

4. Wind generator (1) according to Claim 3, **characterized in that** there is provided a cap strip (10) that is intended to be arranged above the adhesive bonding region (KB) of the covering element (9.1).

5. Wind generator (1) according to one of Claims 2 to 4,
**characterized in that** a magnet arrangement (9.2), provided for attaching to an inner lateral face of a second component comprising one of the flanges (5, 6), is arranged at a second end region (B2) of the covering element (9.1).

6. Wind generator (1) according to one of Claims 2 to 5,
**characterized in that** the covering element (9.1) is made of a mechanically flexible material.

7. Method for mounting a protection arrangement (8) on a flange connection (2) of a wind generator (1), wherein
- a sleeve (9) of the protection arrangement (8) is secured to a flange connection (2), between a foundation (4) and a tower segment (3) that is secured to the foundation (4) by means of a flange connection (2), so as to completely cover the flange connection (2), and/or
- a sleeve (9) of the protection arrangement (8) is arranged on a flange connection (2), between two tower segments (3), so as to completely cover the flange connection (2), and
- a dehumidifying apparatus (11) of the protection arrangement is fluidically coupled to a space (R) formed between the at least one sleeve (9) and the associated flange connection (2).

8. Method according to Claim 7, wherein
- a first end region (B1) of a covering element (9.1) of the sleeve (9) is adhesively bonded to an inner lateral face of the tower segment (3) coupled to the foundation (4), and/or
- a first end region (B1) of a covering element (9.1) of the sleeve (9) is adhesively bonded to an inner lateral face of an upper one of two tower segments (3) that are connected to one another by means of a flange connection (2).

9. Method according to Claim 7 or 8, wherein
- a second end region (B2) of a covering element (9.1) of the sleeve (9) is secured by means of a magnet arrangement (9.2) to an inner lateral face of the foundation (4) that is coupled to the tower segment (3), and/or
- a second end region (B2) of a covering element (9.1) of the sleeve (9) is secured by means of a magnet arrangement (9.2) to an inner lateral face of a lower one of two tower segments (3) that are connected to one another by means of a flange connection (2).

## Revendications

1. Éolienne (1), comprenant
- une fondation (4),
- une tour fixée à la fondation (4) avec un segment de tour tubulaire (3) ou avec plusieurs segments de tour tubulaires (3) et
- au moins un agencement de protection (8) pour un raccord à brides (2), comprenant deux brides (5, 6) et plusieurs raccords à vis (7), d'une éolienne (1),
- la fondation (4) et le segment de tour (3) fixé à celle-ci comprenant chacun un collet orienté vers l'intérieur et formant une bride (5, 6) et/ou plusieurs segments de tour (3) raccordés les uns aux autres comprenant sur des côtés en vis-à-vis à chaque fois un collet orienté vers l'intérieur et formant une bride (6), et
- des brides (5, 6) adjacentes les unes aux autres étant raccordées, au moyen de plusieurs raccords à vis (7), à chaque fois en un raccord à brides (2), **caractérisée en ce que**
- au moins un raccord à brides (2) est recouvert avec l'agencement de protection (8), comprenant
- une manchette (9) recouvrant entièrement le raccord à brides (2) et fixée à des composants qui comprennent les brides (5, 6), et
- un dispositif de déshumidification (11) couplé fluidiquement à un espace (R) formé entre la manchette (9) et le raccord à brides (2), qui introduit de l'air déshumidifié (L1) dans l'espace (R) et notamment en extrait de l'air humide (L2).

2. Éolienne (1) selon la revendication 1, **caractérisée en ce que** la manchette (9) comprend au moins un élément de recouvrement (9.1), conçu pour le recouvrement d'au moins une section du raccord à brides (2) .

3. Éolienne (1) selon la revendication 2, **caractérisée en ce qu'**une zone adhésive (KB) prévue pour une fixation sur une surface d'enveloppe intérieure d'un premier composant comprenant une des brides (5, 6) est agencée sur une première zone d'extrémité (B1) de l'élément de recouvrement (9.1).

4. Éolienne (1) selon la revendication 3, **caractérisée en ce qu'**une bande de capuchon (10) prévue pour un agencement au-dessus de la zone adhésive (KB) de l'élément de recouvrement (9.1) est prévue.

5. Éolienne (1) selon l'une quelconque des revendications 2 à 4,
**caractérisée en ce qu'**un agencement magnétique (9.2) prévu pour une fixation sur une surface d'enveloppe intérieure d'un deuxième composant comprenant une des brides (5, 6) est agencé sur une deuxième zone d'extrémité (B2) de l'élément de recouvrement (9.1).

6. Éolienne (1) selon l'une quelconque des revendications 2 à 5,
**caractérisée en ce que** l'élément de recouvrement (9.1) est formé en un matériau mécaniquement flexible.

7. Procédé de montage d'un agencement de protection (8) sur un raccord à brides (2) d'une éolienne (1), dans lequel
- une manchette (9) de l'agencement de protection (8) est fixée sur un raccord à brides (2) entre une fondation (4) et un segment de tour (3) fixé à celle-ci au moyen d'un raccord à brides (2) en recouvrant entièrement le raccord à brides (2), et/ou
- une manchette (9) de l'agencement de protection (8) est agencée sur un raccord à brides (2) entre deux segments de tour (3) en recouvrant entièrement le raccord à brides (2), et
- un dispositif de déshumidification (11) de l'agencement de protection est couplé fluidiquement à un espace (R) formé entre l'au moins une manchette (9) et le raccord à brides associé (2).

8. Procédé selon la revendication 7, dans lequel
- un élément de recouvrement (9.1) de la manchette (9) est collé avec une première zone d'extrémité (B1) sur une surface d'enveloppe intérieure du segment de tour (3) couplé avec la fondation (4), et/ou
- un élément de recouvrement (9.1) de la manchette (9) est collé avec une première zone d'extrémité (B1) sur une surface d'enveloppe intérieure d'un segment de tour supérieur parmi deux segments de tour (3) raccordés l'un à l'autre au moyen d'un raccord à brides (2) .

9. Procédé selon la revendication 7 ou 8, dans lequel
- un élément de recouvrement (9.1) de la manchette (9) est fixé avec une deuxième zone d'extrémité (B2) au moyen d'un agencement magnétique (9.2) sur une surface d'enveloppe intérieure de la fondation (4) couplée avec le segment de tour (3), et/ou
- un élément de recouvrement (9.1) de la manchette (9) est fixé avec une deuxième zone d'extrémité (B2) au moyen d'un agencement magnétique (9.2) sur une surface d'enveloppe intérieure d'un segment de tour inférieur parmi deux segments de tour (3) raccordés l'un à l'autre au moyen d'un raccord à brides (2).
